# EUROPEAN PATENT APPLICATION

(11) **EP 2 525 202 A1**
(43) Date of publication of application: **21.11.2012**
(21) Application number: 11166905.7
(22) Date of filing: 20.05.2011
(51) Int. Cl.: G01L 27/00

(54) **Pressure detection arrangement and method**

(71) Applicant: Sony Ericsson Mobile Communications AB, 221 88 Lund (SE)
(72) Inventor: Persson, Magnus, SE-247 47, Flyinge (SE); Kristensson, Andreas, SE-211 28, Malmö (SE)
(74) Representative: Valea AB

(57) **Abstract**

The present invention relates to a method and a device (10) comprising a controller (13) and a pressure sensor (150). The controller is configured to calibrate the pressure sensor (150) based on a current position of the device and/or current pressure information received from a source.

## Description

### TECHNICAL FIELD

The present invention, relates to an arrangement for detecting an ambient pressure in general and an arrangement for detecting ambient pressure in a mobile terminal in particular. Especially, the present invention relates to calibration of a pressure sensor in the mobile terminal.

### BACKGROUND

A pressure sensor is typically a device with a diaphragm which, when exposed to a pressure, deflects and causes that pressure sensor to output a signal associated with that pressure. Conventional pressure sensors may be used in a variety of applications.

Mobile terminals, such as mobile phones can be provided with a pressure sensor to provide a user with pressure information. These sensors developed lately are very sensitive and show high accuracy (less than 1 meter), and provide information on relative pressure changes, which may be useful for varieties of applications, such as applications relating to outdoor activities, e.g. running, cycling, skiing, etc.

As the air pressure at sea level at different places varies, e.g. depending on the weather conditions, the absolute height over sea level may be more difficult to extract.

For example, 1 hPa change in pressure is equivalent to approximately 8 meters of altitude change. The air pressure at sea level typically varies from 950 to 1050 hPa depending on the weather conditions. This gives a potential error of more than 400 meters in altitude if the weather conditions are not compensated for (1013 hPa is used as sea level air pressure).

One way to compensate for weather changes can be to download current and predicted future weather data including air pressure at sea level from a server for the current location. These values are however estimates and do not take into consideration the variations and errors in the pressure sensor hardware.

NFC (Near Field Communication) or RFID tags are passive devices that can be used to communicate with active NFC devices (an active NFC reader/writer). The NFC tags can be used within different applications, where small amounts of data can be stored and transferred to active NFC devices. Normally, a live area can be used as a touch point for the active NFC device.

The stored data on the NFC tag may contain any form of data. In view of this only small amounts of data may be required. In order that the communication between the active NFC reader/writer and the passive NFC tag to work, NFC Data Exchange Format, NDEF, and Record Type Definitions, RTD, may be used

The NFC tag is a passive device with no power of its own. Accordingly when one is used, the user touches or brings adjacent an NFC enabled device onto the tag. A small amount of power is taken by the NFC tag from the reader/writer radiation to power the tag electronics. The tag is then enabled to transfer a small amount of information to the reader/writer.

The data stored in the tag memory is transferred to the NFC enabled device. Although normally only a small amount of data, this may be used to direct the device to a website URL, it may be a small amount of text, or other data.

### SUMMARY

Consequently, the present invention aims to provide a method and arrangement for simplified and correct calibration of a pressure sensor, especially a pressure sensor incorporated in mobile terminal.

For this reason, the present invention relates to a device comprising a controller and a pressure sensor. The controller is configured to calibrate the pressure sensor (150) based on a current position of the device and/or current pressure information received from a source. The source is a transmitter. The transmitter may be a radio transmitter comprising a memory including the position and/or pressure information. The transmitter may be a Near Filed Communication, NFC, tag or Radio Frequency Identity, RFID, tag. The source may be a network server. The transmitter may be configured to be updated. The current position of the device and/or current pressure information comprises one or several of: an altitude of the source, a unique identity of the source, or altitude related information of the source. The device may be one of a radiotelephone having ability for near field communication or Internet/intranet access, a global navigation satellite system (GNSS) receiver, a personal communications system (PCS) terminal, a personal digital assistant (PDA), a camera having communication ability, and a computation or communication device capable of transceiving.

The invention also relates to a transceiver device comprising a communication part, a controller and a memory. The controller is configured to transmit through said communication part a pressure relevant data upon inquiry. The device is one a Near Filed Communication, NFC, tag or Radio Frequency Identity, RFID, tag. The pressure relevant data includes current position of the device and/or current pressure information comprises one or several of: an altitude of the source, a unique identity of the source, or altitude related information of the source.

The invention also relates to a method of calibrating a pressure sensor, the method comprising: Obtaining a position and/or pressure value, using the pressure value or a value obtained through the position to set a new value in the sensor for use as relative pressure value.

### BRIEF DESCRIPTION OF THE DRAWINGS

In the following, the invention is described with reference to exemplary embodiments, in which:
- Fig. 1: is a system configuration diagram illustrating an outline of a terminal according to the invention,
- Fig. 2: is a tag configuration diagram illustrating, and

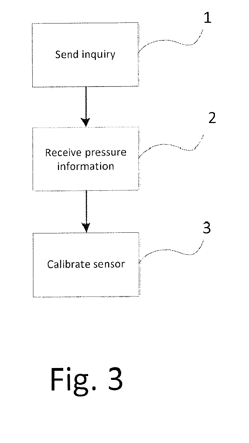

- Fig. 3: illustrates method steps according to one embodiment.

### DETAILED DESCRIPTION

The present invention proposes, according to one embodiment, that the pressure sensor recalibrates itself or is calibrated by the device it is implemented in, when an NFC tag (or RFID tag) is activated in vicinity. Thus, an NFC tag is used to store different type of data to assist a terminal comprising the pressure sensor to obtain calibration data:
- The altitude of an NFC tag can be known by the tag itself and transferred to the terminal through a suitable protocol, or
- A database that keeps track of the altitudes of the different NFC tags can be available and the terminal may be configured to connect to a server to find out what the altitude is of the recently activated tag, or
- The user can have the terminal to remember altitude related information of certain NFC tags so that when activated at a later stage, the pressure sensor calibration is instantaneous.

The solution according to the present invention, removes the error related to variations and errors in the pressure sensor hardware. Compared to a solution where the sea level air pressure is looked up towards a weather database, it will also remove the error caused by any estimation errors.

A "device" or "terminal" as the term is used herein, is to be broadly interpreted to include a radiotelephone having ability for near field communication or Internet/intranet access, and/or global navigation satellite system (GNSS) receiver; a personal communications system (PCS) terminal that may combine a cellular radiotelephone with data processing; a personal digital assistant (PDA) that can include a radiotelephone or wireless communication system; a laptop; a camera (e.g., video and/or still image camera) having communication ability; and any other computation or communication device capable of transceiving, such as a personal computer, a home entertainment system, a television, etc.

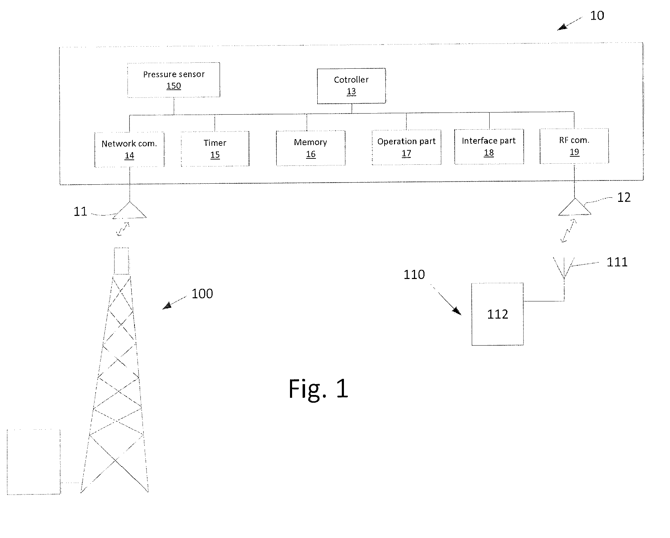

In the following exemplifying embodiments, the invention is described with reference to a mobile communication terminal, such as a mobile phone. As shown in Fig. 1, a terminal 10 includes a main antenna 11, and the reader antenna 12. The main antenna 11 conducts radio communication with a radio communication network 100. The reader antenna 12 conducts radio communication with the NFC tags 110. Of course, the antennas 11 and 12 may be same antenna.

The terminal further includes a controller 13, which is a central processing unit, a network communication control part 14, a timer 15, a memory 16, operation part 17, user interface part 18, a radio frequency (RF) communication control part 19 and a pressure sensor 150. The network communication control part 14 performs transmission and reception of a signal with the radio base station 100 via the wireless network through the main antenna 11. The timer 15 measures time. The memory 16 is composed of a RAM, a ROM, for example. The operation part 17 receives input of an instruction and information from the operator. The interface part 18 controls display, and I/O functionality. The RF communication control part 19 controls radio communication with the NFC tag 110 through the reader antenna 12.

The controller 13 controls various functions of the terminal and may perform signal processing in accordance with a program stored in advance in the memory. As a result, the controller executes various controls of the entire terminal.

The NFC tag 110 has an RFID tag circuit element provided with the tag antenna 111 and an IC circuit part 112. The NFC tag 110 can be incorporated in articles or information exchange terminals, not particularly shown, for example.

In one embodiment, the controller is configured to processes a signal read from the IC circuit part 112 of the NFC tag circuit element. Also, the controller 13 generates a response request command in order to access the IC circuit part 112 of the NFC tag circuit element.

The RF communication control part 19 accesses the information of the IC circuit part 112 of the tag circuit element through the reader antenna 111, that is, the NFC tag information including the tag ID. The RF communication control part 19 may be composed of a transmitting portion and a receiving portion (not shown). The transmitting portion transmits a signal to the NFC tag circuit element through the reader antenna 12. That is, the transmitting portion is a block that generates an interrogation wave to access the NFC tag information of the IC circuit part 112 of the tag circuit element. In this example, the interrogation wave to perform only reading of the tag 110 information is generated.

As the carrier wave, a frequency of a UHF band, a micro wave band or a short wave band may be used, for example. The NFC tag information is not limited to the modulated signal as described above but can be a mere carrier wave.

The RF communication part 19 receives an input of a response wave from the tag, received by the antenna 12.

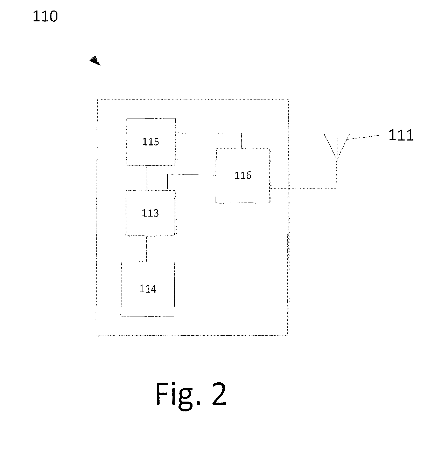

The function of NFC tag 110 is assumed to be well known by a skilled person. However, a simplified embodiment is shown in Fig. 2. The tag 110 comprises a controller 113, a memory 114, a power source part 115 and a communication part 116.

The communication part 116 rectifies the interrogation wave that is an interrogation signal, received by the tag antenna 111. The power source part 115 accumulates energy of the interrogation wave and uses the energy as a driving power source of the tag circuitry.

Further, the communication part 116, connected to the tag antenna 111, may demodulate a communication signal from the reader antenna 12 of the device 10 for communicating with the tag, received by the tag antenna 111. The communication part 116 also modulates a reply signal from the controller 113 and transmits it as a response wave, that is, a signal including a tag ID and information, from the tag antenna 111.

The controller 113 executes basic control of the tag circuit element through the memory 114 and communication part 116. Particularly, the controller interprets a received signal demodulated by the communication part 116 and generates a reply signal on the basis of the information signal stored in the memory 114.

The memory 114 stores a predetermined information signal. The memory may include information on:
- The altitude of the NFC tag, or
- NFC tag ID,
- A link address, and/or
- Pressure related information.

In operation, when the terminal 10 is in touch or vicinity of the tag, such as a transmission from the terminal through antenna 12 is detected by the tag 110, the NFC tag 110 generates a signal as a response, comprising it identity and/or altitude information.

Based on the type of information received, the terminal may execute calibration of the pressure sensor 150:
- If the altitude of the tag is received, the sensor is calibrated based on the current altitude; the sensor is reset and the new pressure value received from the tag is used to set the current pressure value,
- If a tag identity is received, the terminal my send an inquiry to a service provider via the communication network to provide it with pressure information to calibrate the pressure sensor based on the specific tag identity,
- The tag may continuously (wired or wireless) be programmed/updated with current pressure information, which is received by the terminal and used for calibration of the sensor, and
- The tag may provide the terminal with an URL, which contains correct altitude and pressure information, which is fetched by the terminal to calibrate the sensor.

The present invention may have number applications areas:
An application example: In a skiing area where, e.g. NFC tags are used at the lift gates as a means to control access to the lifts. The mobile device can be used to activate the tags and gain access to the lifts. When activating an NFC tag to gain access, the pressure sensor may simultaneously be calibrated based on altitude information from the tag since its position is known to the system.

Another application example: When going out for a run. Before leaving home, a marker with an NFC tag may be touched. The user may place the marker at a known location and altitude beforehand, and that information can be used to instantaneously calibrate the pressure sensor.

The various embodiments of the present invention described herein is described in the general context of method steps or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

An "NFC tag", "RFID tag" or "tag" should be interpreted broadly to include transceivers which upon reception if an inquiry signal provide the inquiring device with relevant information. Such tags may use various radio frequencies and protocols for communication. The communication may include Bluetooth, IR, etc.

Software and web implementations of various embodiments of the present invention can be accomplished with standard programming techniques with rule-based logic and other logic to accomplish various database searching steps or processes, correlation steps or processes, comparison steps or processes and decision steps or processes. It should be noted that the words "component" and "module," as used herein and in the following claims, is intended to encompass implementations using one or more lines of software code, and/or hardware implementations, and/or equipment for receiving manual inputs.

The foregoing description of embodiments of the present invention, have been presented for purposes of illustration and description. The foregoing description is not intended to be exhaustive or to limit embodiments of the present invention to the precise form disclosed, and modifications and variations are possible in light of the above teachings or may be acquired from practice of various embodiments of the present invention. The embodiments discussed herein were chosen and described in order to explain the principles and the nature of various embodiments of the present invention and its practical application to enable one skilled in the art to utilize the present invention in various embodiments and with various modifications as are suited to the particular use contemplated. The features of the embodiments described herein may be combined in all possible combinations of methods, apparatus, modules, systems, and computer program products.

## Claims

1. A device (10) comprising a controller (13) and a pressure sensor (150), **characterised in that** the controller is configured to calibrate the pressure sensor (150) based on a current position of the device and/or current pressure information received from a source.

2. The device of claim 1, further comprising a communication part (14)

3. The device of claim 1 or 2, wherein the source is a transmitter.

4. The device of claim 3, wherein the transmitter is a radio transmitter comprising a memory including the position and/or pressure information.

5. The device of claim 3, wherein the transmitter is a Near Filed Communication, NFC, tag or Radio Frequency Identity, RFID, tag.

6. The device of claim 1, wherein the source is a network server.

7. The device of claim 4, wherein the transmitter is configured to be updated.

8. The device according to any of preceding claims, wherein the current position of the device and/or current pressure information comprises one or several of:
• an altitude of the source,
• a unique identity of the source, or
• altitude related information of the source.

9. The device according to any of preceding claims, being one of a radiotelephone having ability for near field communication or Internet/intranet access, a global navigation satellite system (GNSS) receiver, a personal communications system (PCS) terminal, a personal digital assistant (PDA), a camera having communication ability, and a computation or communication device capable of transceiving.

10. A transceiver device (110) comprising a communication part (116), a controller (113) and a memory, **characterised in that** said controller is configured to transmit through said communication part (116) a pressure relevant data upon inquiry.

11. The device of claim 10, being one a Near Filed Communication, NFC, tag or Radio Frequency Identity, RFID, tag.

12. The device according any of claims 10 or 11, wherein said pressure relevant data includes current position of the device and/or current pressure information comprises one or several of:
• an altitude of the source,
• a unique identity of the source, or
• altitude related information of the source.

13. A method of calibrating a pressure sensor, the method comprising:
• Obtaining a position and/or pressure value,
• Using the pressure value or a value obtained through the position to set a new value in the sensor for use as relative pressure value.
